# EUROPÄISCHE PATENTSCHRIFT

(11) **EP 2 675 588 B1**
(45) Veröffentlichungstag und Bekanntmachung des Hinweises auf die Patenterteilung: **01.03.2017**
(21) Anmeldenummer: 11790635.4
(22) Anmeldetag: 05.12.2011
(51) Int. Cl.: B23K 26/38, B23K 26/03

(54) **VERFAHREN ZUR KONTROLLE EINER SCHNEIDENDEN BEARBEITUNG AN EINEM WERKSTÜCK**
METHOD FOR CONTROLLING A CUTTING OPERATION OF A WORKPIECE
MÉTHODE DE CONTRÔLE D'UNE OPÉRATION DE DÉCOUPE SUR UNE PIÈCE

(30) Priorität: 15.02.2011 DE 102011004117
(43) Veröffentlichungstag der Anmeldung: 25.12.2013
(73) Patentinhaber: Trumpf Laser- und Systemtechnik GmbH, 71254 Ditzingen (DE)
(72) Erfinder: HAGENLOCHER, Tobias, 71254 Ditzingen (DE); ZIMMERMANN, Markus, 70771 Leinfelden-Echterdingen (DE)
(74) Vertreter: Kohler Schmid Möbus Patentanwälte
(86) Internationale Anmeldenummer: PCT/EP2011/071708
(87) Internationale Veröffentlichungsnummer: WO 2012/110129

(56) Entgegenhaltungen:
- EP-A2- 1 433 563
- JP-A- 3 077 790
- US-A- 5 618 454
- US-A- 5 763 853

## Beschreibung

Die vorliegende Erfindung betrifft ein Verfahren zur Kontrolle einer schneidenden Bearbeitung an einem Werkstück zum Trennen eines Werkstückteils von einem Restwerkstück entlang einer gewünschten Schnittkontur.

Das schneidende Bearbeiten von insbesondere plattenartigen Werkstücken, z.B. Blechen, kann mittels einer thermischen Bearbeitung, z.B. durch Laserstrahlschneiden, oder mittels einer mechanischen Bearbeitung, z.B. durch stanzendes Bearbeiten (Nibbeln), erfolgen. Bei der Laserbearbeitung erfolgt das Schneiden mittels eines Laserbearbeitungskopfes, der entlang einer vorgegebenen Schnittkontur relativ zu einem in einer Bearbeitungsebene angeordneten Werkstück bewegt wird. Zum Erzeugen der Relativbewegung können der Laserbearbeitungskopf und/oder das Werkstück in der Bearbeitungsebene verschoben werden. Beim Schneiden eines Werkstücks durch stanzendes Bearbeiten wird in der Regel der Stanzvorgang an einer ortsfesten Stanzpresse vorgenommen, wobei das Werkstück in der Bearbeitungsebene verschoben wird. Es versteht sich, dass an ein- und derselben Werkzeugmaschine sowohl eine stanzende als auch eine thermische Bearbeitung vorgenommen werden kann.

Beim schneidenden Bearbeiten wird das Werkstück entlang einer (typischer Weise geschlossenen) Schnittkontur in ein oder mehrere Werkstückteile und ein Restwerkstück (Restteil oder Restgitter) getrennt (siehe EP-A-1433563). Die Werkstückteile fallen beim vollständigen Freischneiden aus dem Restgitter heraus und können, falls es sich um Gutteile handelt, auf unterhalb des Restgitters angeordneten Auflageelementen gelagert werden. Bei den freigeschnittenen Werkstückteilen kann es sich aber auch um Abfall handeln, der nach dem Freischneiden entsorgt wird.

Beim Trennschneiden kann das Problem auftreten, dass einzelne Werkstückteile, insbesondere Schneidbutzen, aufgrund von Prozessfehlern oder falsch eingestellten Prozessparametern nicht vollständig oder ggf. gar nicht vom Restgitter frei geschnitten werden und daher nicht aus dem Restgitter herausfallen, so dass beim schneidenden Bearbeiten innerhalb der gewünschten Schnittkontur kein vollständiger Durchbruch in dem Restgitter entsteht. Ein solcher Fehler wird bei der automatisierten Fertigung in der Regel nicht detektiert und kann ggf. erst bei einer nachfolgenden Qualitätskontrolle von einem Bediener oder einem anderen Prozessbeteiligten erkannt werden. Schneidbutzen stellen in diesem Zusammenhang Werkstückteile dar, die aus Gutteilen zur gewünschten Konturerzeugung ausgeschnitten und überwiegend als Abfall entsorgt werden.

Die US 4,504,727 beschreibt ein System zur Steuerung einer Laserbearbeitung an einer Platine. Bei der bohrenden Bearbeitung durch mehrere Schichten aus unterschiedlichen Schichtmaterialien kann anhand eines photoakustischen Signals, welches von dem gepulsten Laserstrahl im jeweiligen Schichtmaterial erzeugt wird, ein Schneidendpunkt erkannt und auf diese Weise ein Schneidfehler vermieden werden.

Die EP 1 886 757 A1 beschreibt eine Vorrichtung und ein Verfahren zur Online-Überwachung der Qualität eines Laserprozesses an einem Werkstück mittels einer Wärmebildkamera. Die Wärmebildkamera detektiert Strahlung aus einer Wechselwirkungszone des Laserstrahls mit dem Werkstück. Anhand des Wärmebildes kann beispielsweise auf ein nicht vollständiges Durchtrennen des Werkstücks während eines Schneidprozesses geschlossen werden.

Eine Laserbearbeitungsmaschine zur Detektion eines Schneidfehlers während eines Schneidprozesses ist auch aus der JP 03077790 A bekannt geworden. Ein unterhalb des Werkstücks im Bereich eines Schnittspalts angeordneter Photodetektor detektiert durch den Schnittspalt hindurch tretende Laserstrahlung. Detektiert der Photodetektor keine Strahlung mehr, wurde das Werkstück beim Laserschneiden nicht vollständig durchtrennt, so dass ein Schneidfehler vorliegt.

Die JP 2002 331 383 A beschreibt eine Einrichtung zur Überwachung eines thermischen Schneidprozesses, bei welcher eine Ist-Schnittspaltbreite mit einer Soll-Schnittspaltbreite verglichen wird, um einen Scheidfehler zu bestimmen. Zur Bestimmung der Ist-Schnittspaltbreite ist eine um eine Brennschneideinrichtung rotierende Vorrichtung vorgesehen, welche es erlaubt, den Schnittspalt hinter der Brennschneideinrichtung zu beobachten.

Aus der DE 691 14 399 T2 ist eine Vorrichtung bekannt geworden, die eine Erfassung der Beendigung eines Durchstechens bzw. Durchtrennens beim Schneiden von Metallflächen ermöglicht. Diese weist einen Sensorkopf zur Erfassung von Licht auf, das an einer Oberfläche eines (metallischen) Werkstücks bei der Laserbearbeitung erzeugt wird. Die Vorrichtung detektiert das Ende des Durchtrennens bei einem Einstechvorgang anhand eines Signalabfalls des erfassten Signals. Nachfolgend wird ein Schneidvorgang eingeleitet und mittels eines Referenzspannungswerts einer von dem Signal abgeleiteten Spannung bestimmt, ob der Schneidvorgang korrekt oder fehlerhaft verläuft.

Aus der US 5,618,454 A ist es bekannt, Rauchschwaden zu detektieren, die beim Verdampfen des Materials eines Werkstücks während des Bearbeitens mit einem Laser entstehen. Werden die Rauchschwaden detektiert, deutet dies darauf hin, dass die Bearbeitung noch nicht abgeschlossen ist. Wird das Fehlen der Rauchschwaden detektiert, deutet dies darauf hin, dass die Bearbeitung des Werkstücks abgeschlossen ist.

Aus der US 5,763,853 ist eine Laserbearbeitungsmaschine bekannt geworden, bei der eine Detektier-Lichtquelle verwendet wird, um das Vorhandensein oder die Abwesenheit eines Werkstücks in der Nähe einer Bearbeitungsposition zu detektieren. Hierbei wird ein Detektier-Signal erzeugt, welches dem von einem Detektor detektierten Licht der Detektier-Lichtquelle entspricht.

### Aufgabe der Erfindung

Es ist die Aufgabe der vorliegenden Erfindung, ein Verfahren der eingangs genannten Art dahingehend weiterzubilden, dass das vollständige Freischneiden eines Werkstückteils nach der schneidenden Bearbeitung eines Werkstücks automatisiert überprüft werden kann.

### Gegenstand der Erfindung

Diese Aufgabe wird erfindungsgemäß gelöst durch ein Verfahren der eingangs genannten Art, bei dem nach der schneidenden Bearbeitung folgende Schritte durchgeführt werden: Einstrahlen eines insbesondere gepulsten Laserstrahls oder eines Laserpulses auf das Werkstück an eine Stelle innerhalb der gewünschten Schnittkontur, Detektieren von durch eine Wechselwirkung zwischen dem Laserstrahl und dem Werkstück erzeugter Strahlung, sowie Auswerten der detektierten Strahlung um zu prüfen, ob beim schneidenden Bearbeiten das Werkstückteil vollständig vom Restwerkstück getrennt wurde.

Bei einer korrekten schneidenden Bearbeitung mit geschlossener Kontur wird das Werkstückteil, insbesondere der Schneidbutzen, vollständig vom Restwerkstück getrennt und fällt aus der Werkstückebene aus dem Restwerkstück bzw. -gitter nach unten heraus, so dass kein Werkstückmaterial mehr innerhalb der gewünschten Schnittkontur vorhanden ist. Wird der Laserstrahl in diesem Fall in Strahlausbreitungsrichtung im Wesentlichen senkrecht zur Oberfläche des Werkstücks an einer Stelle innerhalb der gewünschten Schnittkontur eingestrahlt, strahlt der Laserstrahl durch den gebildeten Durchbruch bzw. das dort gebildete Loch ins Leere. In diesem Fall findet keine Wechselwirkung zwischen dem Laserstrahl und dem Werkstück statt, so dass keine bzw. eine äußerst geringe Strahlungsintensität detektiert wird.

Wird das Werkstückteil bei der schneidenden Bearbeitung hingegen nicht vollständig freigetrennt, so verbleibt dieses (ggf. verkippt) im Restgitter. Der Laserstrahl interagiert in diesem Fall im Bereich des vermeintlich geschnittenen Lochs bzw. Durchbruchs mit dem Werkstück, wobei Strahlung entsteht, anhand derer auf einen fehlerhaften Schneidprozess geschlossen werden kann. Typischer Weise ist es hierbei ausreichend, wenn nur ein einziger Laserpuls an eine Stelle innerhalb der gewünschten Schnittkontur eingestrahlt wird, d.h. es wird nicht zwingend ein Laserstrahl mit mehreren aufeinander folgenden Pulsen benötigt. Der einzelne Laserpuls ist aber umgekehrt auch durch mehrere aufeinander folgende Pulse darstellbar.

Durch Auswertung der detektierten Strahlung ist somit eine unmittelbare automatisierte Kontrolle des Bearbeitungsergebnisses möglich. Die Kontrolle nach der schneidenden Bearbeitung kann hierbei jeweils nach dem Erzeugen einer einzelnen (geschlossenen) Schnittkontur erfolgen; alternativ ist es aber auch möglich, die Kontrolle erst durchzuführen, wenn alle oder eine Gruppe von (geschlossenen) Konturen an einem Werkstück (Blechtafel) geschnitten wurden. Fällt hingegen ein nicht vollständig freigeschnittenes Werkstückteil erst nach einem oder mehreren nachfolgenden Prozess-Schritten auf, z.B. nachdem das Bauteil lackiert und montiert ist, so ist der hierbei produzierte Ausschuss mit hohen Kosten verbunden.

Bei einer Variante ist die detektierte Strahlung bei der Wechselwirkung zwischen dem Laserstrahl und dem Werkstück erzeugtes Prozesslicht und/oder Wärmestrahlung. Bei der Wechselwirkung des Laserstrahls mit dem Werkstück bzw. dem nicht vollständig freigeschnittenen Werkstückteil entsteht ein Prozessleuchten mit Wellenlängen, die typischer Weise im UV- oder VIS-Bereich liegen. Dieses Prozessleuchten und/oder Wärmestrahlung (im NIR- bzw. IR-Bereich), welche beim Aufheizen des Werkstücks durch den Laserstrahl erzeugt wird, kann mittels eines geeigneten Detektors detektiert werden. Insbesondere können zur Detektion auch Einrichtungen zur Prozesslichtüberwachung verwendet werden, die ohnehin bereits in einer entsprechenden Laserbearbeitungsmaschine vorgesehen sind. Bei der Detektion von Prozesslicht bzw. Wärmestrahlung wird bei der Interaktion des Laserstrahls mit dem nicht vollständig freigeschnittenen Werkstückteil letzteres typischer Weise beschädigt.

Bei einer weiteren Variante ist die detektierte Strahlung vom Werkstück zurück reflektierte Laserstrahlung. In diesem Fall besteht das Werkstück aus einem Material, welches die Laserstrahlung zumindest teilweise reflektiert, was typischer Weise bei metallischen Werkstücken, insbesondere bei Blechen, der Fall ist. Wird vom Werkstück zurück reflektierte Laserstrahlung detektiert, kann der Laserstrahl mit einer gegenüber der Detektion des Prozessleuchtens bzw. der Wärmestrahlung deutlich geringeren Leistung eingestrahlt werden, da in diesem Fall ein teilweises Aufschmelzen des Werkstücks an der Stelle, an welcher der Laserstrahl auftrifft, nicht erforderlich ist. Neben dem zur Bearbeitung genutzten Laserstrahl kann alternativ auch ein anderer Laser, insbesondere ein Laser mit einer anderen Wellenlänge, wie bspw. ein Pilotlaser, zum Einstrahlen an die Stelle innerhalb der gewünschten Schnittkontur eingesetzt werden.

In einer weiteren Variante sticht bei nicht vollständig getrenntem Werkstückteil der gepulste Laserstrahl oder Laserstrahlpuls an der Stelle, an der er auf das Werkstück eingestrahlt wird, vollständig durch das Werkstückteil hindurch. In diesem Fall kann ein Laserstrahl bzw. ein Laserpuls mit einer Leistung und Zeitdauer auf das Werkstück eingestrahlt werden, welche ausreichend ist, das Werkstückteil vollständig zu durchstechen. Alternativ zu einer festen Vorgabe der Dauer des gepulsten Laserstrahls bzw. Laserstrahlpulses kann ein vollständiges Durchstechen auch anhand der detektierten Strahlung bzw. des zeitlichen Verlaufs der detektierten Strahlung erkannt werden. Der Laserstrahl bzw. Laserstrahlpuls kann in diesem Fall automatisch abgeschaltet werden, sobald das Durchstechen erkannt wurde.

In einer Ausführungsform wird anhand der detektierten Strahlung ein Kippwinkel zwischen dem nicht vollständig getrennten Werkstückteil und dem Restwerkstück bestimmt. Wird das Werkstückteil von dem eingestrahlten Laserstrahl vollständig durchstochen, kann anhand der Zeitdauer, in der eine erhöhte Strahlungsintensität detektiert wird, auf die Dauer des Einstechvorgangs geschlossen werden. Da die Dicke des jeweils vom Laserstrahl durchstochenen Materials vom Kippwinkel abhängig ist, kann unter Bezugnahme auf einen Materialtyp aus der Zeitdauer des Einstechvorgangs auf den Kippwinkel geschlossen werden. Alternativ ist es auch möglich, in das Werkstück einzustechen und sofern über eine bestimmte Zeitdauer kein Signalabfall der detektierten Strahlung erkannt wird, der auf ein vollständiges Durchstechen hindeutet, auf einen Kippwinkel zu schließen, der größer ist als ein Referenzkippwinkel. In diesem Fall ist es nicht erforderlich, vollständig durch das Werkstück hindurch zu stechen.

Ein nicht zur Erfindung gehöriger Aspekt betrifft eine Laserbearbeitungsmaschine zur schneidenden Bearbeitung an einem Werkstück zum Trennen eines Werkstückteils von einem Restwerkstück entlang einer gewünschten Schnittkontur, umfassend: einen Laserbearbeitungskopf zum Einstrahlen eines insbesondere gepulsten Laserstrahls oder Laserstrahlpulses an eine Stelle innerhalb der gewünschten Schnittkontur nach Abschluss der schneidenden Bearbeitung, eine Detektoreinheit zur Detektion von durch eine Wechselwirkung zwischen dem Laserstrahl und dem Werkstück erzeugter Strahlung, sowie eine Auswerteeinrichtung, die ausgebildet bzw. programmiert ist, anhand der detektierten Strahlung zu prüfen, ob beim schneidenden Bearbeiten das Werkstückteil vollständig vom Restwerkstück getrennt wurde.

Es versteht sich, dass der Detektor zur Detektion von Prozesslicht, Wärmestrahlung und/oder vom Werkstück reflektierter Laserstrahlung ausgebildet sein kann. Auch kann die Strahlungsintensität und die Pulsdauer des Laserstrahls so eingestellt bzw. lang gemacht werden, dass der Laserstrahl vollständig durch das ggf. noch im Restgitter vorhandene Werkstückteil hindurch stechen kann. Dies kann genutzt werden, um mit Hilfe der Auswerteeinrichtung einen Kippwinkel des Werkstückteils gegenüber dem Restwerkstück zu bestimmen. Insbesondere kann hierbei eine Auswerteeinrichtung bzw. Mess-Sensorik zum Einsatz kommen, die bereits für andere Aufgaben verwendet wird, z.B. zur online-Überwachung während des Schneidprozesses. Für die vorliegende Anwendung kann die Auswerteeinrichtung geeignet programmiert werden, indem dieser ein geeigneter Auswertealgorithmus hinzugefügt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Laserbearbeitungsmaschine zum schneidenden Bearbeiten eines Werkstücks,
- Fign. 2a,b: schematische Darstellungen einer korrekten schneidenden Bearbeitung (Fig. 2a) sowie einer fehlerhaften schneidenden Bearbeitung (Fig. 2b), und
- Fign. 3a-c: Darstellungen von Messkurven der Intensität eines Laserstrahls und des gemessenen Prozesslichts bei der Wechselwirkung des Laserstrahls mit einem nicht vollständig freigeschnittenen Werkstückteil bei drei unterschiedlichen Kippwinkeln.

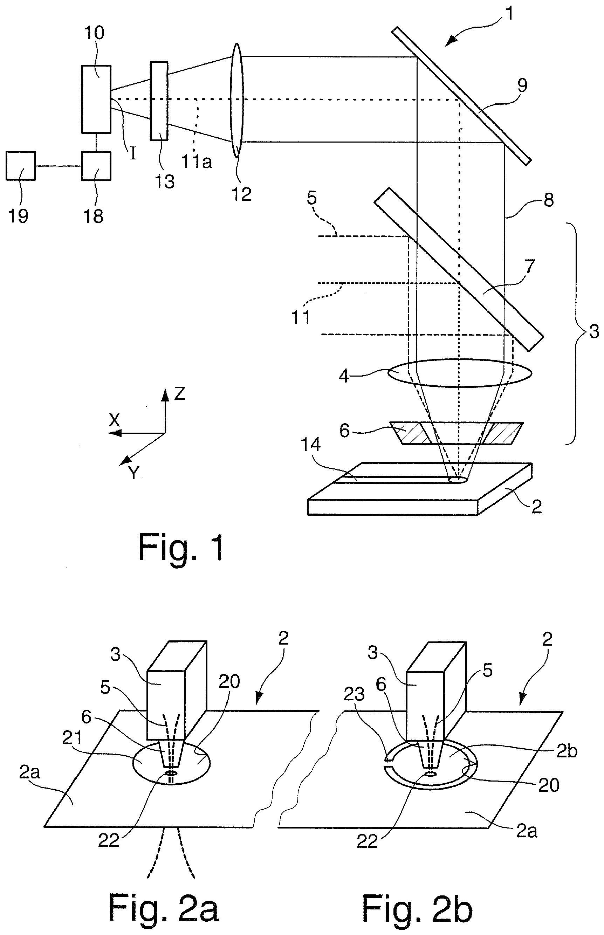

**Fig. 1** zeigt ein Detail einer Laserbearbeitungsmaschine 1 zum schneidenden Bearbeiten eines Werkstücks 2, welche eine Bearbeitungseinheit in Form eines Laserbearbeitungskopfs 3 umfasst. Der Laserbearbeitungskopf 3 weist eine Fokussierlinse 4 aus Zinkselenid zur Fokussierung eines CO₂-Laserstrahls 5, welcher von einem (nicht gezeigten) CO₂-Laser erzeugt wird, eine Schneidgas-Düse 6 sowie einen Umlenkspiegel 7 auf. Im vorliegenden Fall ist der Umlenkspiegel 7 teildurchlässig ausgebildet und reflektiert den einfallenden CO₂-Laserstrahl 5 (mit einer Wellenlänge von ca. 10 µm) und transmittiert für die Prozessüberwachung relevante, vom Werkstück 2 ausgehende Strahlung 8 in einem Wellenlängebereich, der im vorliegenden Beispiel zwischen ca. 550 nm und 2000 nm liegt. Es versteht sich, dass die hier beschriebene Laserbearbeitungsmaschine 1 auch über eine (nicht gezeigte) Festkörperlaserstrahlquelle, wie einen Scheiben- oder Faserlaser, mit einer Strahlung im 1 µm-Bereich oder auch frequenzkonvertiert verfügen kann.

In der Laserbearbeitungsmaschine 1 ist hinter dem teildurchlässigen Spiegel 7 ein weiterer Umlenkspiegel 9 angeordnet, welcher die Strahlung 8 auf einen Detektor in Form einer Kamera 10 umlenkt. Bei der Kamera 10 kann es sich um eine Hochgeschwindigkeitskamera handeln, die koaxial zur Laserstrahlachse 11 bzw. zur Verlängerung der Laserstrahlachse 11a und somit richtungsunabhängig angeordnet ist. Für eine verbesserte Abbildung ist im vorliegenden Beispiel zwischen dem teildurchlässigen Spiegel 7 und der Kamera 10 ein in Fig. 1 als Linse dargestelltes abbildendes, fokussierendes optisches System 12 vorgesehen, welches die für die Prozessüberwachung relevante Strahlung 8 auf die Kamera 10 fokussiert. Alternativ ist es auch möglich, die Strahlung nicht ortsaufgelöst zu detektieren, z.B. indem an Stelle der Kamera 10 eine oder mehrere Photodioden als Detektoreinheit verwendet werden. Um am Werkstück 2 reflektierte Laserstrahlung detektieren zu können, kann der teildurchlässige Umlenkspiegel 7 auch durch eine andere Form von Strahlteiler, z.B. durch einen Lochspiegel, ersetzt werden, so dass auch Strahlung mit der Wellenlänge des Laserstrahls 5 auf die Kamera 10 gelangen und detektiert werden kann.

Bei dem in Fig. 1 gezeigten Beispiel ist ein Filter 13 vor der Kamera 10 von Vorteil, wenn weitere Strahlungs- bzw. Wellenlängenanteile von der Erfassung mit der Kamera 10 ausgeschlossen werden sollen. Der Filter 13 kann z.B. als schmalbandiger Bandpassfilter mit geringer Halbwertsbreite ausgebildet sein. Prinzipiell ergibt sich die Möglichkeit der Aufnahme des Bildes durch die Kamera 10 im Auflichtverfahren (unter Verwendung einer (nicht gezeigten) zusätzlichen Beleuchtungsquelle) im VIS-Wellenlängebereich, ggf. auch im NIR-Wellenlängebereich, sofern die zusätzliche Beleuchtungsquelle im NIR-Bereich strahlt, sowie alternativ die Aufnahme des Prozesseigenleuchtens bzw. eines Wärmebildes in den Wellenlängenbereichen UV und NIR/IR. Insbesondere kann auch an dem Werkstück 2 reflektierte Laserstrahlung in einem Wellenlängenbereich um ca. 10 µm mittels eines zusätzlichen (nicht gezeigten) Detektors detektiert werden, welcher z.B. außen an dem Laserbearbeitungskopf 3 angebracht ist. Es versteht sich, dass eine Überwachung der für den Laserschneidprozess relevanten Strahlung auch auf andere Weise durchgeführt werden kann, beispielsweise wie dies in der DE 10 2010 028 179.4 der Anmelderin beschrieben ist, welche bezüglich dieses Aspekts zum Inhalt dieser Anmeldung gemacht wird.

Um eine Schneidkontrolle während des in Fig. 1 gezeigten Laserschneidprozesses durchzuführen, bei dem ein Schnittspalt 14 im Werkstück 2 gebildet wird, ist eine in Fig. 1 gezeigte Auswerteeinrichtung 18 vorgesehen, welche eine Auswertung der vom Detektor 10 gemessenen Intensität I vornimmt. Die Auswerteeinrichtung 18 kann hierbei während des Laserschneidprozesses zur Online-Überwachung eingesetzt werden. Die Auswerteeinrichtung 18 wird bei der vorliegenden Anwendung zusätzlich auch nach dem Abschluss des Laserschneidens zur Schneidkontrolle verwendet, und zwar um zu überprüfen, ob während der vorausgehenden schneidenden Bearbeitung entlang einer gewünschten Schnittkontur 20 (vgl. **Fig. 2a****,b**) ein zu trennendes Werkstückteil 2b von einem Restwerkstück 2a vollständig freigeschnitten wurde. Diese Überprüfung kann unmittelbar nach dem Schneiden einer einzelnen Schnittkontur erfolgen, es ist alternativ aber auch möglich, die Überprüfung erst durchzuführen, wenn alle oder eine Gruppe von (geschlossenen) Konturen an dem Werkstück 2 (Blechtafel) geschnitten wurden.

Im vorliegenden Beispiel ist die gewünschte Schnittkontur 20 kreisförmig, es versteht sich aber, dass die Geometrie der Schnittkontur 20 grundsätzlich beliebig sein kann. Die gewünschte Schnittkontur 20 ist hierbei in der Regel in sich geschlossen, dies ist aber nicht zwingend erforderlich. So kann beispielsweise für den Fall, dass eine Kante des zu trennenden Werkstückteils eine Außenkante des Werkstücks bildet, ein Trennen des Werkstückteils vom Restwerkstück erfolgen, ohne eine geschlossene Kontur zu schneiden. Bei der schneidenden Bearbeitung kann es z.B. durch ungünstig gewählte Prozessparameter vorkommen, dass die geschnittene Kontur nicht mit der gewünschten Schnittkontur übereinstimmt, so dass eine beispielsweise stegförmige Anbindung zwischen Restwerkstück 2a und Werkstückteil 2b verbleibt.

Fig. 2a zeigt den Fall einer korrekten schneidenden Bearbeitung, bei der beim Schneiden entlang der Schnittkontur 20 das (in Fig. 2a nicht gezeigte) Werkstückteil vollständig vom Restwerkstück 2a getrennt wurde und nach unten aus dem Werkstück 2 heraus gefallen ist, so dass sich ein kreisförmiges Loch 21 im Restwerkstück 2a gebildet hat. In diesem Fall ist kein Material im Bereich innerhalb der Schnittkontur 20 mehr vorhanden.

Fig. 2b zeigt hingegen den Fall einer fehlerhaften schneidenden Bearbeitung, bei der das Werkstückteil 2b nicht vollständig vom Restwerkstück 2a getrennt wurde und im Restwerkstück 2a verblieben ist, da das Werkstückteil 2b noch über eine stegförmige Verbindung 23 mit dem Restwerkstück 2a verbunden ist.

Um zu prüfen, ob das Werkstückteil 2b vom Restwerkstück 2a vollständig getrennt wurde, wird in beiden gezeigten Fällen der Laser-Bearbeitungskopf 3 und/oder das Werkstück 2 mittels (nicht gezeigter) Bewegungseinrichtungen so in der XY-Ebene positioniert, dass ein im Wesentlichen senkrecht zur Oberfläche des Werkstücks 2 ausgerichteter Laserstrahl 5 an einer Stelle 22 innerhalb der Schnittkontur 20 auf das Werkstück 2 eingestrahlt wird. Ist wie in Fig. 2a gezeigt dort ein Loch 21 gebildet, strahlt der Laserstrahl 5 ins Leere. Entsprechend wird keine bzw. nur eine geringfügige Strahlungsintensität I vom Detektor 10 detektiert. Ist das Werkstückteil 2b hingegen wie in Fig. 2b gezeigt nicht vollständig vom Restwerkstück 2a freigeschnitten, interagiert der Laserstrahl 5 im Bereich des vermeintlich geschnittenen Lochs mit dem Werkstück 2 bzw. dem nicht freigeschnittenen Werkstückteil 2b. Hierbei entsteht Strahlung 8 in Form von Prozesseigenleuchten, Wärmestrahlung aufgrund der Erwärmung des Werkstücks 2 sowie rückreflektierte Laserstrahlung, die auf die oben beschriebene Weise mittels des Detektors 10 bzw. eins zusätzlichen Detektors erfasst werden kann.

Stellt die Auswerteeinrichtung 18 (vgl. Fig. 1) anhand der detektierten Strahlung 8 fest, dass ein Werkstückteil 2b nicht vollständig freigeschnitten wurde, übermittelt diese ein Fehlersignal an eine Steuerungseinrichtung 19, welche mit der Auswerteeinrichtung 18 in signaltechnischer Verbindung steht. Die Steuerungseinrichtung 19 kann wahlweise das fehlerhafte Bauteil bzw. Werkstückteil markieren, eine Warnung an einen Bediener ausgeben, den Schneidprozess abbrechen, den Schneidprozess, ggf. unter Verwendung anderer Parameter, erneut vollständig oder für einen Teilbereich der zu schneidenden Kontur wieder aufnehmen etc.

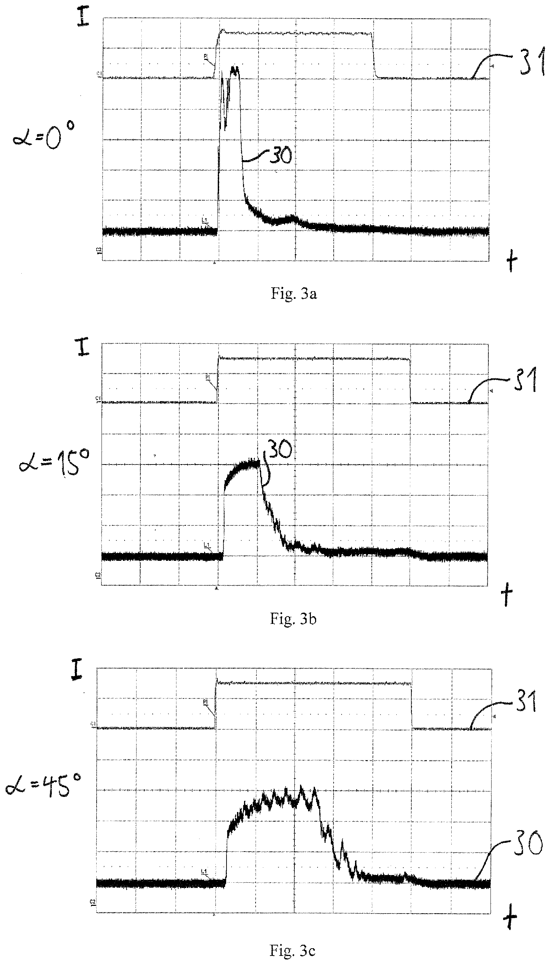

Die Auswerteeinheit 18 kann nicht nur eine fehlerhafte schneidende Bearbeitung sondern im Fehlerfall auch einen Kippwinkel α des nicht vollständig freigetrennten Werkstückteils 2b bezüglich der (XY-)Ebene des Werkstücks 2 bestimmen, wie nachfolgend anhand der **Fign. 3a****-c** erläutert wird. Die Verkippung kommt aufgrund des Eigengewichts des Werkstückteils 2b zu Stande, welches nur noch über eine z.B. stegförmige Anbindung mit dem Restwerkstück 2a verbunden bleibt.

Fign. 3a-c zeigen jeweils ein vom Detektor 10 aufgenommenes Prozesslicht-Signal 30 sowie ein Intensitäts-Signal 31 des (gepulsten) Laserstrahls 5. Das Werkstück 2 bestand bei den in Fign. 3a-c gezeigten Messungen aus Baustahl mit einer Dicke von ca. 1 mm.

Bei dem in Fig. 3a gezeigten Fall befand sich das nicht vollständig freigeschnittene Werkstückteil 2b ohne Verkippung in der Ebene des Restwerkstücks 2a (Kippwinkel α = 0°, vgl. Fig. 2b). Die Gesamtdauer des Laserpulses 31 lag bei 2 ms. Zu Beginn des Laserpulses 31 stieg das Prozesslicht-Signal 30 stark an und fiel nach ca. 0,3ms wieder stark ab. Zu diesem Zeitpunkt wurde durch das Material des Werkstückteils 2b vollständig hindurch gestochen.

Beim in Fig. 3b gezeigten Fall war das Werkstückteil 2a unter einem Kippwinkel α = 15° bezüglich des Restwerkstücks 2a (XY-Ebene) nach unten verkippt. Der Laserpuls 31 hatte in diesem Fall eine Zeitdauer von 10 ms. Der Pegel des gemessenen Prozesslicht-Signals 30 war geringer als beim in Fig. 3a gezeigten Beispiel und die Einstechzeit bis zum Abklingen des Pegels des Prozesslicht-Signals 30 nahm zu.

Beim in Fig. 3c gezeigten Fall war das nicht freigetrennte Werkstückteil 2b noch weiter verkippt, und zwar um einen Kippwinkel von α = 45°. Die Zeitdauer des Laserpulses 31 betrug in diesem Fall ebenfalls 10 ms. Der Messpegel des Prozesslicht-Signals 30 war gegenüber dem in Fig. 3b gezeigten Fall geringer und die Einstechzeit hat sich nochmals verlängert.

Wie anhand der Fign. 3a-c deutlich wird, kann anhand des Prozesslicht-Signals 30, genauer gesagt anhand des Verlaufs des beim Einstechvorgang gemessenen Messpegels, insbesondere der Einstechdauer, der Kippwinkel α bestimmt werden, den das im Restwerkstück 2a verbliebene Werkstückteil 2b relativ zur Ebene des Restwerkstücks 2a aufweist. Durch dem Scheidprozess vorausgehende Versuche an einem vorgegebenen Werkstück-Material (und bei vorgegebener Dicke) kann eine Kalibrierung der Messung vorgenommen werden.

Zusammenfassend kann mittels des oben beschriebenen Verfahrens eine automatisierte Prüfung des vollständigen Freischneidens eines Werkstückteils von einem Restwerkstück vorgenommen werden. Die hier beschriebene Prüfung lässt sich sehr schnell durchführen, da die Relativbewegung zwischen Werkstück und Laser-Bearbeitungskopf zur Positionierung des Laserstrahls innerhalb der Schnittkontur sowie der Einstechvorgang nur wenige Millisekunden benötigen.

Es versteht sich, dass das schneidende Bearbeiten nicht zwingend mittels des Laserstrahls erfolgen muss, vielmehr kann das schneidende Bearbeiten auch an einer an der Laserbearbeitungsmaschine ggf. zusätzlich vorgesehene Stanzstation (z.B. durch Nibbeln) erfolgen. Auch in diesem Fall kann nach dem schneidenden Bearbeiten der Laserstrahl oberhalb des Bereichs des freizuschneidenden Werkstückteils positioniert werden.

## Patentansprüche

1. Verfahren zur Kontrolle einer schneidenden Bearbeitung an einem Werkstück (2) zum Trennen eines Werkstückteils (2b) von einem Restwerkstück (2a) entlang einer gewünschten Schnittkontur (20), **dadurch gekennzeichnet, dass** nach der schneidenden Bearbeitung folgende Schritte durchgeführt werden:
Einstrahlen eines insbesondere gepulsten Laserstrahls oder Laserstrahlpulses (5) auf das Werkstück (2) an eine Stelle (22) innerhalb der gewünschten Schnittkontur (20), Detektieren von durch eine Wechselwirkung zwischen dem Laserstrahl (5) und dem Werkstück (2) erzeugter Strahlung (8), sowie
Auswerten der detektierten Strahlung (8) um zu prüfen, ob beim schneidenden Bearbeiten das Werkstückteil (2b) vollständig vom Restwerkstück (2a) getrennt wurde.

2. Verfahren nach Anspruch 1, bei dem die detektierte Strahlung (8) bei der Wechselwirkung zwischen dem Laserstrahl (5) und dem Werkstück (2) erzeugtes Prozesslicht und/oder Wärmestrahlung ist.

3. Verfahren nach Anspruch 1 oder 2, bei dem die detektierte Strahlung (5) vom Werkstück (2) zurück reflektierte Laserstrahlung ist.

4. Verfahren nach einem der vorhergehenden Ansprüche, bei dem bei nicht vollständig getrenntem Werkstückteil (2b) der gepulste Laserstrahl (5) an der Stelle (22), an der er auf das Werkstückteil (2b) eingestrahlt wird, vollständig durch das Werkstückteil (2b) hindurchsticht.

5. Verfahren nach einem der vorhergehenden Ansprüche, bei dem anhand der detektierten Strahlung (8) ein Kippwinkel (α) zwischen dem nicht vollständig getrennten Werkstückteil (2b) und dem Restwerkstück (2a) bestimmt wird.

## Claims

1. A method for monitoring cutting processing on a workpiece (2) for separating a part (2b) of the workpiece from a remainder (2a) of the workpiece along a desired cut contour (20), **characterized in that**, after the cutting processing, the following steps are carried out:
irradiating the workpiece (2) with an in particular pulsed laser beam or laser beam pulse (5) at a location (22) within the desired cut contour (20),
detecting radiation (8) generated by an interaction between the laser beam (5) and the workpiece (2), and
evaluating the detected radiation (8) in order to check whether, during the cutting processing, the part (2b) of the workpiece was completely separated from the remainder (2a) of the workpiece.

2. The method as claimed in claim 1, wherein the detected radiation (8) is process light and/or thermal radiation generated during the interaction between the laser beam (5) and the workpiece (2).

3. The method as claimed in claim 1 or 2, wherein the detected radiation (8) is laser radiation reflected back from the workpiece (2).

4. The method as claimed in any of the preceding claims, wherein, in the case where the part (2b) of the workpiece is not completely separated, the pulsed laser beam (5), at the location (22) where it irradiates the part (2b) of the workpiece, completely passes through the part (2b) of the workpiece.

5. The method as claimed in any of the preceding claims, wherein a tilting angle (α) between the part (2b) of the workpiece that is not completely separated and the remainder (2a) of the workpiece is determined on the basis of the detected radiation (8).

## Revendications

1. Procédé de contrôle d'un usinage par découpe effectué sur une pièce (2), en vue de séparer une partie (2b) de la pièce d'avec une partie restante (2a) de ladite pièce le long d'un profil de découpe souhaité (20), **caractérisé par** l'exécution des étapes suivantes, à l'issue de l'usinage par découpe :
irradiation de la pièce (2) par un faisceau laser notamment pulsé, ou par une impulsion (5) de faisceau laser, en un emplacement (22) situé à l'intérieur du profil de découpe souhaité (20),
détection d'un rayonnement (8) engendré par une interaction entre ledit faisceau laser (5) et la pièce (2), et
évaluation dudit rayonnement (8) détecté, afin de vérifier si la partie (2b) de la pièce a été intégralement séparée d'avec la partie restante (2a) de ladite pièce au cours de l'usinage par découpe.

2. Procédé selon la revendication 1, dans lequel le rayonnement (8) détecté est de la lumière de processus et/ou un rayonnement thermique engendré(e) lors de l'interaction entre le faisceau laser (5) et la pièce (2).

3. Procédé selon la revendication 1 ou 2, dans lequel le rayonnement (8) détecté est un rayonnement laser renvoyé par la pièce (2).

4. Procédé selon l'une des revendications précédentes, dans lequel, lorsque la partie (2b) de la pièce est incomplètement séparée, le faisceau laser pulsé (5) perfore, l'intégralité de ladite partie (2b) de la pièce à l'emplacement (22) auquel il vient incider sur ladite partie (2b) de la pièce.

5. Procédé selon l'une des revendications précédentes, dans lequel un angle de basculement (α), entre la partie (2b) de la pièce incomplètement séparée et la partie restante (2a) de ladite pièce, est déterminé sur la base du rayonnement (8) détecté.
